**Europäisches Patentamt**

**European Patent Office**

**Office européen des brevets**

(19)

(11) Veröffentlichungsnummer: **0 184 698**
A2

# (12) EUROPÄISCHE PATENTANMELDUNG

(21) Anmeldenummer: 85114802.3

(22) Anmeldetag: 21.11.85

(51) Int. Cl.⁴: **F 16 F 9/06,** F 16 F 9/19,
F 16 F 9/40

---

(30) Priorität: 08.12.84 DE 8436001 U

(43) Veröffentlichungstag der Anmeldung: 18.06.86
Patentblatt 86/25

(84) Benannte Vertragsstaaten: **AT BE CH DE FR GB IT LI NL SE**

(71) Anmelder: **Fritz Bauer + Söhne oHG,
Industriestrasse 12-14, D-8503 Altdorf b. Nürnberg (DE)**

(72) Erfinder: **Bauer, Hans Jürgen, Am Eichenhain 8,
D-8503 Altdorf (DE)**
Erfinder: **Bauer, Hans-Peter, Ziegelhütte 9,
D-8503 Altdorf (DD)**

(74) Vertreter: **Rau, Manfred, Dr. Dipl.-Ing., Rau & Schneck,
Patentanwälte Königstrasse 2, D-8500 Nürnberg 1 (DE)**

---

(54) **Hydraulischer Doppelrohr-Dämpfer.**

(57) Ein hydraulischer Doppelrohr-Dämpfer weist ein Innenrohr (1) und ein dieses umgebendes Außenrohr (2) und einen im Innenrohr (1) verschiebbar angeordneten und mit einer Kolbenstange (6) verbundenen Kolben (7) auf. Der Innenraum (16) des Innenrohrs (1) und ein Teil des zwischen Außenrohr (2) und Innenrohr (1) gebildeten Außenraums (17) sind mit Dämpfungsflüssigkeit und der Rest des Außenraums (17) mit Gas gefüllt, wobei der Innenraum (16) und der Außenraum (17) durch einen Kanal miteinander verbunden sind.

Um auch bei annähernd horizontalem Einsatz eine raumsparende Raumgestaltung zu erreichen, ist ein ganz überwiegendes Teil-Volumen (31) des Außenraums (17) auf einer Seite des Innenrohres (1) ausgebildet.

0184698

Fritz Bauer + Söhne oHG, Industriestraße 12-14,
8503 Altdorf
--------------------------------------------------------
Hydraulischer Doppelrohr-Dämpfer
--------------------------------------------------------

Die Erfindung betrifft einen Doppelrohr-Dämpfer nach
dem Oberbegriff des Anspruches 1.

Bei derartigen Dämpfern ist das Außenrohr gleichermaßen wie das Innenrohr kreiszylindrisch ausgebildet
und umgibt das Innenrohr konzentrisch. Solche Dämpfer
werden in allen möglichen Einbaulagen, also im gesamten
Bereich zwischen einer horizontalen und einer vertikalen
Einbaulage eingebaut und müssen in einer solchen Einbaulage voll funktionsfähig bleiben, d.h. es darf kein
den sogenannten Ausgleichsraum im Außenraum füllendes
Gas in den Innenraum gelangen, da sonst die Dämpfungswirkung des Dämpfers stark beeinträchtigt und insbesondere
völlig undefiniert würde.

Bei überwiegend vertikalem Einbau solcher Dämpfer
mit dann nach oben herausgeführter Kolbenstange ist
man diesem Problem dadurch begegnet, daß auf der dem kolbenstangenaustrittsseitigen Ende entgegengesetzten
Seite des Gehäuses zwischen Außenraum und Innenraum
ein sogenanntes Boden-Ventil angeordnet ist, durch
das beim Ausfahren der Kolbenstange, also bei einer
Volumenvergrößerung des Innenraums die Dämpfungsflüssigkeit aus dem Außenraum in den Innenraum transportiert
wird; durch ein solches Boden-Ventil wird also ausgeschlossen, daß das sich im kolbenstangenaustrittsseitigen Bereich im Außenraum befindende Gas in den Innenraum überströmt. Damit bei überwiegend horizontalem
Einbau des Dämpfers sichergestellt ist, daß in keinem
Fall Gas in den Innenraum gelangt, muß das Außenrohr
gegenüber dem Innenrohr ein sehr großes Übermaß haben,
damit ein solches Überströmen nicht stattfinden kann.
Bei räumlich beschränkten Einbauverhältnissen kann
dies dazu führen, daß ein solcher Doppelrohr-Dämpfer
nicht mehr eingesetzt werden kann. Eine entsprechende
Verringerung des Querschnitts des Innenrohres ist
in vielen Fällen nicht möglich, da die durch Dämpfungsbewegungen im Innenrohr in Wärme umgesetzte zu dämpfende
Energie von der zu kleinen Oberfläche des Innenrohres
und entsprechend des Außenrohres nicht mehr abgegeben
werden kann. Solche Dämpfer werden dann im Betrieb
zu warm.

Der Erfindung liegt daher die Aufgabe zugrunde, einen
hydraulischen Doppelrohr-Dämpfer der gattungsgemäßen
Art so auszugestalten, daß auch bei annähernd horizontalem Einsatz eine raumsparende Ausgestaltung erreicht
wird.

Diese Aufgabe wird erfindungsgemäß durch die Merkmale
des Kennzeichnungsteiles des Anspruches 1 gelöst.
Durch die erfindungsgemäßen Maßnahmen wird zum einen erreicht, daß der notwendige Außenraum sich im wesentlichen nur auf einer Seite des Innenrohres befindet,
daß also die Breite des Dämpfers im wesentlichen durch
den aus den genannten Gründen vorgegebenen Durchmesser
des Innenrohres bestimmt wird. Zum anderen wird der
Gesamtquerschnitt des Dämpfers im Vergleich zu Dämpfern
mit kreiszylindrischem Außenrohr deutlich verringert,
da der gesamte Außenraum nur unwesentlich größer sein
muß als das von der Kolbenstange verdrängte Volumen
zuzüglich eines auch bei ausgefahrener Kolbenstange
notwendigen Restvolumens für das Gas.

Zahlreiche weitere Merkmale und Vorteile der Erfindung
ergeben sich aus den Unteransprüchen und der nachfolgenden Beschreibung eines Ausführungsbeispieles anhand
der Zeichnung. Es zeigt

Fig. 1 einen Dämpfer nach der Erfindung im Längsschnitt
und

Fig. 2 einen Querschnitt durch den Dämpfer entsprechend
der Schnittlinie II-II in Fig. 1.

Der in der Zeichnung dargestellte Doppelrohr-Dämpfer
weist ein kreiszylindrisches Innenrohr 1 und ein dieses
achsparallel umgebendes Außenrohr 2 auf.

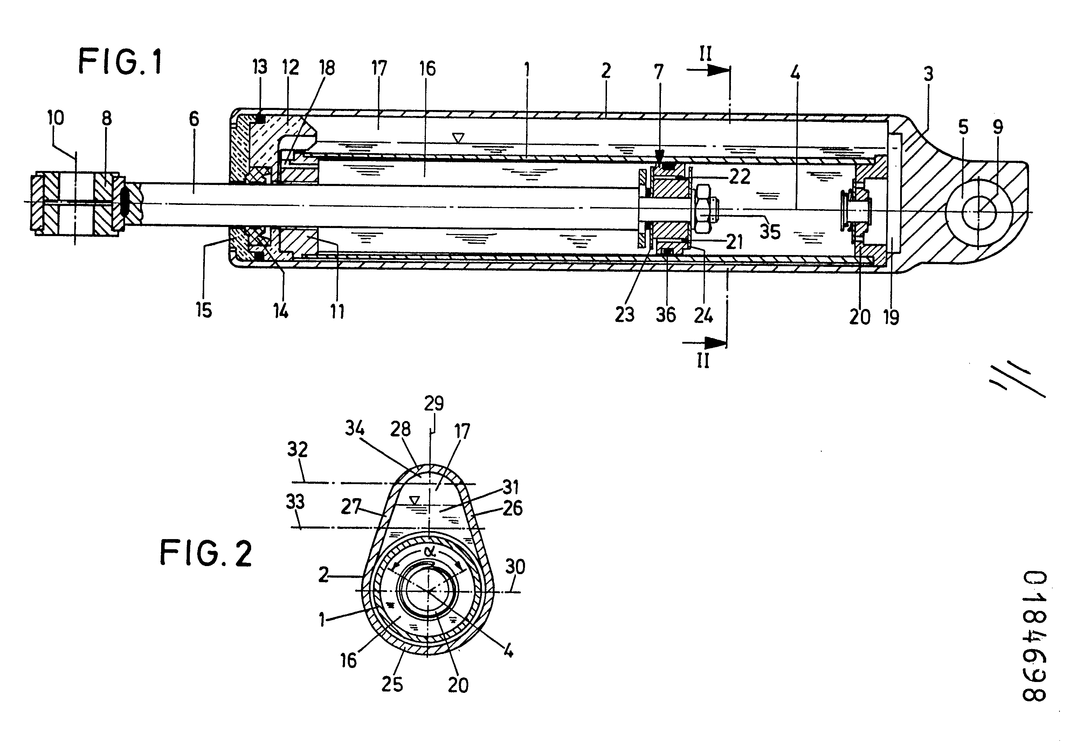

Das Außenrohr 2 ist an einem - in Fig. 1 rechten -
Ende mit einem Boden 3 gas- und flüssigkeitsdicht
verschlossen. An dem Boden 3 ist - fluchtend mit der
Mittel-Längs-Achse 4 des Innenrohres 1 eine Gelenkhülse 5
angebracht, mittels derer der Dämpfer an einem entsprechenden Bauteil angelenkt werden kann.

Ebenfalls konzentrisch mit der Achse 4 ist eine Kolbenstange 6 vorgesehen, die an ihrem inneren Ende einen im Innenrohr verschiebbaren Kolben 7 und an ihrem äußeren Ende ebenfalls eine Gelenkhülse 8 trägt. Die Symmetrieachsen 9, 1o der Gelenkhülsen 5 bzw. 8 sind in der Praxis parallel zueinander angeordnet; sie sind in der Zeichnung nur aus Gründen der Anschaulichkeit gegeneinander verdreht dargestellt.

Die Kolbenstange 6 ist an dem dem Boden 3 entgegengesetzten Ende des Dämpfers in einer Führungsbüchse 11 geführt, auf der das Innenrohr 1 zentriert und axial abgestützt ist. Diese Führungsbüchse 11 ist wiederum in einem Verschlußstopfen 12 zentriert und axial abgestützt, der seinerseits gegen die lnnenwand des Außenrohres 2 abgestützt ist. In entsprechenden Ausnehmungen dieses Verschlußstopfens 12 ist eine äußere, gegen die Innenwand des Außenrohres 2 anliegende Dichtung 13 und eine innere, gegen die Kolbenstange 6 anliegende Dichtung 14 angeordnet, die in axialer Richtung durch eine Verschlußplatte 15 gehalten werden, die gegen die Außenseite des Verschlußstopfens 12 anliegt. Um den Außenrand dieser Verschlußplatte 15 ist das Außenrohr 2 umgebördelt, wodurch das gesamte bisher geschilderte "Paket" in axialer Richtung zusammengehalten wird.

In dem Verschlußstopfen 12 und in der Führungsbüchse 11 ist ein den im Innenrohr 1 gelegenen Innenraum 16 mit dem zwischen dem Außenrohr 2 und dem Innenrohr 1 ausgebildeten Außenraum 17 verbindender Überströmkanal 18 ausgebildet.

Im Bereich des Bodens 3 ist ein den Außenraum 17 mit dem Innenraum 16 verbindender Kanal 19 ausgebildet, in dem ein Boden-Ventil 2o angeordnet ist. Dieses Boden-Ventil 2o öffnet nur, wenn im Innenraum 16 Unterdruck gegenüber dem Außenraum 17 vorliegt; es öffnet also, wenn die Kolbenstange 6 mit Kolben 7 aus dem Innenrohr 1 herausgezogen wird, so daß Flüssigkeit aus dem Außenraum 17 über das Boden-Ventil 2o in den Innenraum 16 strömen kann. Dieses Boden-Ventil 2o hat üblicherweise auch Drosseleigenschaften.

Der Kolben 7 weist Bohrungen 21, 22 auf, die mittels federnder Drosselklappen 23, 24 teilweise geschlossen sind. Diese Drosselklappen 23 bzw. 24 werden geöffnet, d.h. von den Bohrungen 21 bzw. 22 abgehoben, wenn Druck von seiten der Bohrungen 21, 22 auf sie ausgeübt wird. Die zur jeweiligen Bewegungsrichtung des Kolbens rückwärtige Drosselklappe 23 bzw. 24 wird also abgehoben. Auf diesem Wege wird eine sogenannte asymmetrische Dämpfung erzielt.

Insoweit als der Doppelrohr-Dämpfer bis hierher beschrieben ist, ist er im wesentlichen bekannt.

Das Außenrohr 2 hat - wie aus Fig. 2 hervorgeht - einen angenähert ovalen oder elliptischen Querschnitt, dessen wesentliches Merkmal darin besteht, daß mehr als 9o % des Querschnitts des Außenraumes 17 sich auf nur einer Seite des Innenrohres 1 befindet. Im vorliegenden Fall wird der Außenraum 17 begrenzt durch einen etwa halbkreis-zylindrischen Abschnitt 25 des Außenrohres 2, dessen Innendurchmesser nur etwa 1 bis 2 mm größer ist als der Außendurchmesser des Innenrohres 1, wobei der Abstand zwischen beiden aber auch gegen Null gehen kann. Der Abstand sollte in jedem Fall aber kleiner als 2 mm sein. Der Außenraum 17 wird weiter begrenzt durch zwei sich an den Abschnitt 25 anschließende, geneigt zueinander hin verlaufende Wandabschnitte 26, 27 und einen teilkreiszylindrischen Abschnitt 28, der diese beiden Wandabschnitte 26, 27 verbindet.

Wie bereits erwähnt, kann der Querschnitt des Außenrohres 2 auch elliptisch oder oval sein. Entscheidend ist, daß seine eine Haupt-Achse 29 länger ist als seine andere Neben-Achse 3o und daß das Innenrohr 1 in einem der beiden Endbereiche der Haupt-Achse 29 angeordnet ist, so daß der ganz überwiegende Teil des Außenraumes 17 sich auf nur einer Seite des Innenrohres 1 befindet. Im dargestellten Fall befinden sich etwa 9o % der Querschnittsfläche des Außenraumes 17 über einem Öffnungswinkel $\alpha$ des Innenrohres 1 von etwa 1oo°. Es sollen in jedem Fall aber mindestens 8o% sein.

Das - in Fig. 2 - oberhalb des Innenrohres 1 befindliche Teil-Volumen 31 des Außenraumes 17 ist größer als das von der Kolbenstange 6 beim völligen Einfahren in das Innenrohr 1 verdrängte Volumen bzw. als das beim völligen Ausfahren der Kolbenstange 6 aus dem Außenraum 17 in den Innenraum 16 überführte Flüssigkeitsvolumen. Damit ist sichergestellt, daß auch bei einem horizontalen Einbau kein - zu Ausgleichszwecken im Außenraum 17 befindliches - Gas in den Innenraum 16 gelangt, wodurch ja die Dämpfungswirkung stark beeinträchtigt würde.

In Fig. 2 ist dies durch eine (obere) Niveaulinie 32 und eine (untere) Niveaulinie 33 veranschaulicht. Bei horizontalem Einbau des Dämpfers steigt die den Innenraum 16 ständig vollständig und den Außenraum 17 teilweise füllende Dämpfungsflüssigkeit bei vollständig eingefahrener Kolbenstange 6 bis zur oberen Niveaulinie 32, während sie bei vollständig ausgefahrener Kolbenstange 6 bis zur unteren Niveaulinie 33 fällt. Dieses Gasvolumen 34 ist als Ausgleichsraum erforderlich. Wie oben schon angedeutet wurde, darf die untere Niveaulinie 33 nicht in das Innenrohr gelangen.

Durch das Boden-Ventil 2o mit seiner geschilderten Charakteristik wird sichergestellt, daß bei gegenüber der Horizontalen geneigtem Einbau des Dämpfers, wenn also das kolbenstangenaustrittsseitige Ende oberhalb des Bodens 3 liegt, kein Gas durch den Kanal 18 nachgesaugt werden kann.

Der mit einer Mutter 35 an der Kolbenstange 6 befestigte Kolben 7 ist an seinem Außenumfang gegenüber der Innenwand des Innenrohres 1 mittels einer Dichtung 36 abgedichtet.

0184698

- 8 -

<u>P a t e n t a n s p r ü c h e</u>

1. Hydraulischer Doppelrohr-Dämpfer mit einem Innenrohr (1) und einem dieses umgebenden Außenrohr (2) und einem im Innenrohr (1) verschiebbar angeordneten und mit einer Kolbenstange (6) verbundenen Kolben (7), wobei die Kolbenstange (6) abgedichtet aus einem Ende des im wesentlichen durch das Außenrohr (2) begrenzten Gehäuses herausgeführt ist, wobei der Innenraum (16) des Innenrohres (1) und ein Teil des zwischen Außenrohr (2) und Innenrohr (1) gebildeten Außenraumes (17) mit Dämpfungsflüssigkeit und der Rest des Außenraumes (17) mit Gas gefüllt ist, und wobei der Innenraum (16) und der Außenraum (17) mindestens an einem Ende des Gehäuses durch einen Kanal (18) miteinander verbunden sind, <u>dadurch gekennzeichnet,</u> daß ein ganz überwiegendes Teil-Volumen(31) des Außenraumes (17) auf einer Seite des Innenrohres (1) ausgebildet ist.

0184698

2. Dämpfer nach Anspruch 1, dadurch gekennzeichnet, daß die innere Querschnittsfläche des Außenrohres (2) gestreckt ausgebildet ist, und daß das Innenrohr (1) an einem Ende einer Hauptachse (29) der Querschnittsfläche angeordnet ist und daß der überwiegende Teil der nicht vom Innenrohr (1) ausgefüllten Querschnittsfläche des Außenrohres (2) sich auf nur einer Seite des Innenrohres (1) befindet.

3. Dämpfer nach Anspruch 2, dadurch gekennzeichnet, daß die Querschnittsfläche des Außenrohres (2) elliptisch ausgebildet ist.

4. Dämpfer nach Anspruch 2, dadurch gekennzeichnet, daß die Querschnittsfläche des Außenrohres (2) oval ausgebildet ist.

5. Dämpfer nach Anspruch 2, dadurch gekennzeichnet, daß das Außenrohr (2) einen Querschnitt aufweist, der durch einen etwa halbkreiszylindrischen Abschnitt (25), dessen Durchmesser nur geringfügig größer ist als der Außendurchmesser des Innenrohres (1), und durch sich an diesen Abschnitt (25) anschließende Wandabschnitte (26, 27, 28) gebildet ist.

6. Dämpfer nach Anspruch 2, dadurch gekennzeichnet, daß sich mindestens 80% der nicht von dem Innenrohr (1) ausgefüllten inneren Querschnittsfläche des Außenrohres (2) auf nur einer Seite des Innenrohres (1) befinden.

FIG.1

FIG.2

0184698